# EUROPEAN PATENT APPLICATION

(11) **EP 3 930 124 A1**
(43) Date of publication of application: **29.12.2021**
(21) Application number: 20198069.5
(22) Date of filing: 24.09.2020
(51) Int. Cl.: H02B 1/56, H01B 17/54, H02B 13/035

(54) **HEAT DISSIPATION ARRANGEMENT FOR SWITCHGEARS**

(30) Priority: 26.06.2020 IN 202031027284
(71) Applicant: Siemens Aktiengesellschaft, 80333 München (DE)
(72) Inventor: CHIKHALE, Ravindra, 403602 GOA (IN); KERN, Stefan, 60431 Frankfurt am Main (DE); LANGE, Jan, 63075 Offenbach am Main (DE); SONAWANE, Mahesh, 410210 Navimumbai, Maharashtra (IN); SUNDIKAR, Sagar, 403726 SANCOALE, GOA (IN); AWATE, Dhananjay, 401206 Rajgarh, Maharashtra (IN); LAST, Philipp, 12161 Berlin (DE)
(74) Representative: Patentanwaltskanzlei WILHELM & BECK

(57) **Abstract**

A switching device (100) including at least a switching compartment (100A), a busbar compartment (100B), a cable compartment (100C), and a drive unit (100D) operably connected to one another is provided. The switching compartment (100A) has a stationary contact (102) and a moveable contact (103) moveable for opening and closing an electrical circuit formed therebtween. The switching compartment (100A) also includes a heat dissipation support unit (106) physically disposable between a high heat - high voltage region (104, 103) proximal to the moveable contact (103) and a low heat - earth potential region (101, 100E) thereby, forming a heat convection bridge therebetween during operation of the switching device (100).

## Description

The present disclosure relates to switching devices. More particularly, the present disclosure relates to dissipation of heat generated by current conducted through a circuit breaker of a switchgear.

Circuit breakers are well known for providing overload protection for devices. When a current flows through a circuit breaker, heat tends to be generated due to resistance of contacts, contact stems, and electrical conductors of the circuit breaker. Typically the heat generated in contacts, contact stems, and electrical conductors has disadvantages, because a high temperature raised by the heat may cause contact elements and insulating elements to be worn out earlier causing excessive thermal stresses which in turn lead to further warming of the circuit breaker. This can cause the protecting electronics to function incorrectly, and even cause distortion to the contacts and contact stems, and eventually cause failure of the circuit breaker.

Conventionally, there are multiple techniques existing for aiding dissipation of the heat generated in a circuit breaker. These techniques involve use of heat sinks to increase convection, depositing certain chemicals and paints onto various parts of the circuit breaker to promote heat radiation, increase overall cross-section of the components lying the current carrying path of the circuit breaker to distribute heat uniformly and to reduce electrical resistance, etc. However, each of the techniques mentioned above have their own limitations. Moreover, some of the techniques may not be applicable for circuit breakers that dont have enough space to accommodate heat dissipation means because of dielectric clearances required to be maintained for safe operation of the circuit breaker and the switchgear.

Accordingly, it is an object of the present invention, to provide a switching device having at least a switching compartment, a busbar compartment, a cable compartment, and a drive unit operably connected to one another, wherein the switching compartment, also referred to herein as breaker compartment or circuit breaker compartment, comprises a stationary contact and a moveable contact moveable for opening and closing an electrical circuit formed therebtween that effectively dissipates heat generated during operation of the switching device irrespective of a type of insulant used therein.

The switching device disclosed herein achieves the aforementioned object by a heat dissipation support unit physically disposable between a high heat - high voltage region proximal to the moveable contact and a low heat - earth potential region of the switching device thereby, forming a heat convection bridge therebetween during operation of the switching device. The switching device disclosed herein may be a low, a medium or a high voltage switchgears. As used herein, the term "high heat - high voltage region" refers to a physical area inside the circuit breaker compartment of the switching device and specifically, to a physical area of and surrounding the moveable contact of the circuit breaker. The high heat - high voltage region lies in current path of the switchgear transferring primary current from the feeder to other compartments of the switchgear with highest heat and voltage occurring across the circuit breaker moving contact during opening of the circuit breaker. Also, used herein, the term "low voltage - earth potential region" refers to a physical area inside the switching device and specifically, to a physical area of a housing of the switching device and/or a housing of one or more of the compartments of the switching device which are maintained at earth potential for several reasons known to a person skilled in the art, such as, for ensuring safety of operators who would touch the housing of the switching device.

According to one aspect of the present disclosure, the high heat - high voltage region is the moveable contact. According to this aspect, the low heat - earth potential region is a housing of the drive unit of the switching device, wherein the drive unit controls movement of the moveable contact. According to this aspect, the heat dissipation support unit is connected at one end to the moveable contact and other end to the housing of the drive unit which is maintained at an earth potential. According to this aspect, the heat dissipation support unit is configured as a displaceable unit that moves along with the moveable contact.

According to another aspect of the present disclosure, the high heat - high voltage region is a bearing block at least partially accommodting therewithin the moveable contact. The bearing block is a metallic part made of a good conducting materail such as aluminium to act a a heat sink. The bearing block at least partially accommodates therein the moveable contact and other connections to the moveabel contact such as heat trasnfer flexibles, moveable contact actuation arrangement, etc. According to this aspect, the low heat - earth potential region is a circuit breaker compartment housing also referred to as circuit breaker tank. According to this aspect, the heat dissipation support unit is connected at one end to the bearing block and other end to the housing of the circuit breaker compartment which is maintained at an earth potential. According to this aspect, the heat dissipation support unit is a non-displaceable unit fixedly positioned between the high heat - high voltage region and the low heat - earth potential region.

According to one aspect of the present disclosre, the heat dissipation support unit comprises an encapsulation accommodating therein at least one core. The encapsulation is made of an insulating material such as epoxy or resin which can be easily moulded around the core. Two or more cores can be placed in various configurations including but not limited to a parallel arrangement, etc. Advantageously, at least one core is positioned co-axially inside the encapsulation.

According to one aspect of the present disclosure, each core comprises two or more sections rigidly connected to one another.

Advantageously, one of the sections is made of at least a good conducting metal and connected to the high heat - high voltage region of the switching device. The good conducting metal comprises, for example, Copper, Brass, etc. Having a good conducting metal section ensures an effective transfer of heat and voltage therethrough. Moreover, having a good conducting metal section also allows for threading, punching holes, etc., thereby enabling a solid connection to the high voltage - high heat region in the circuit breaker compartment. Advantageously, the metal section is configured as a pluggable unit that snap-fits with the high heat - high voltage region therbey, allowing for effective heat transfer while preventing physical expansion due to heat generated.

Advantagesously, other section of the core is made of ceramic and connected to the low heat - earth potential region of the switching device. Ceramic mainly refers to crystalline oxide, nitride or carbide material including but not limited to aluminum nitride, aluminum oxide, boron nitride, magnesium oxide, beryllium oxide, etc. The ceramic section ensures transfer of heat threthrough but limites transfer of charge, that is, voltage by breaking voltage conductive connection, thereby ensuring isolation of the high voltage area. Moreover, the ceramic section also improves dielectric stability.

According to one aspect of the present diosclosure, each core comprises a metal section joint to a ceramic section such that the metal section is rigidly connected to the high heat - high voltage region and the ceramic section is rigidly connected to the low heat - earth potential region.

According to another aspect of the present disclosure, each core comprises a metal section joint to a ceramic section joint to a metal section, that is, a ceramic section sandwhiched between two metal sections, such that one of the metal sections is rigidly connected to the high heat - high voltage region and the other metal section is rigidly connected to the low heat - earth potential region.

It must be appreciated that, various permuations and combinations are possible with respect to the metal section and the ceramic section of the core. Similarly, various permutations and combinations are possible with respect to number of cores to be used within the encapsulation.

According to one aspect of the present disclosure, physcial dimensions of the encapsulation as well as the core including the sections are defined based on simulations performed for achieving desired heat conduction, and insulation properties as well as the clearances required to be maintained in and around the heat dissipation support unit.

According to another aspect of the present disclosure, the physical dimensions of the encapsulation as well as the core including the sections are defined based on an amount of mechanical support required to be offered to the the circuit breaker, that is, the moveable contact, the stationary contact, and/or a vaccum tube therebetween. Advantageously, the heat dissipation support unit serves dual purpose of heat convection as well as mechanical support offered for the circuit breaker.

According to one aspect of the present disclosure, the heat dissipation support unit comprises a shielding electrode positioned at each of the one or more physical joints formed between the sections of the core. The shielding electrode protects these physical joints between two or more dissimilar materials from experiencing high electrical stresses as the electrodes make the electrical field uniform at the stressed area.

According to one aspect of the present disclosure, the switching device has a corrugated outer profile corresponding to the low heat - earth potential region where the heat dissipation support unit is connected. The corrugated outer profile include, for example, fins on the outer surface area exposed to ambient environment. This corrugated outer profile helps enhance the heat convection and thereby, cool the low heat - earth potential region during operation of the switching device.

According to another aspect of the present disclosure, the switching device allows for mounting of a heat circulation unit, such as a fan, on the corrugated outer profile thereby, enabling forced convection and cooling the low heat - earth potential region during operation of the switching device.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates an exemplary switching device, in accordance with one or more embodiments of the present disclosure.
- FIG 2A: illustrates a perspective view of a circuit breaker compartment with a section of a housing of the circuit breaker compartment cut-out for depicting components arranged therein, in accordance with one or more embodiments of the present disclosure.
- FIG 2B: illustrates an enlarged view of a portion of the circuit breaker compartment, marked "A" in the FIG 2A showing a heat dissipation support unit, in accordance with one or more embodiments of the present disclosure.
- FIG 3: illustrates a section of the circuit breaker tank of the circuit breaker compartment shown in FIG 1 and FIG 2A.
- FIG 4: illustrates a heat dissipation support unit, in accordance with one or more embodiments of the present disclosure.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

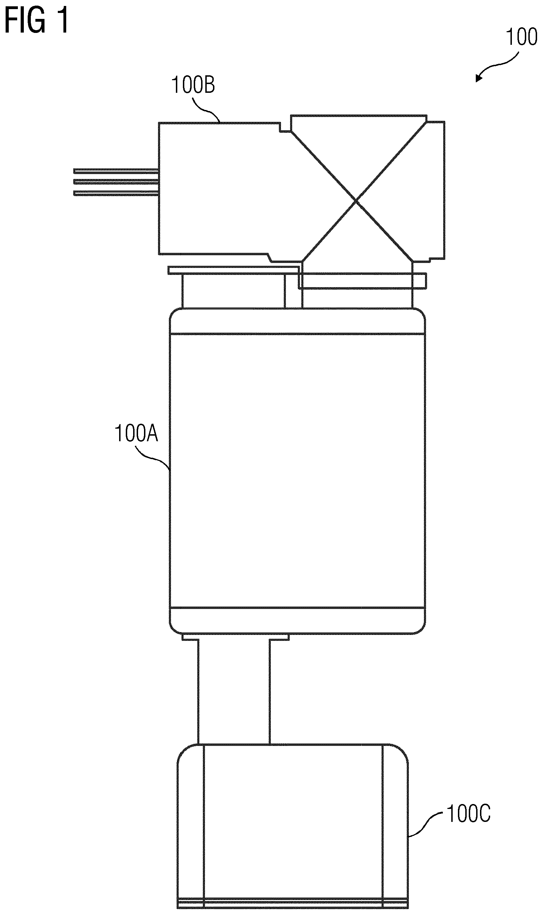

FIG 1 illustrates an exemplary switching device 100, in accordance with one or more embodiments of the present disclosure. In the present illustration, the depicted switching device 100 is a medium voltage switchgear, however, for the purposes of the present disclosure, the switching device 100 may be any type of switchgear as known in the art. In the present embodiments, the switching device 100 may be implemented as a gas-insulated switchgear, a vacuum-insulated switchgear or an air-insulated switchgear. The switching device 100 may be connected to a generator (not shown) or to a consumer line (not shown), in which the generator or the consumer line is disconnectable from or connectable to the power line, that is, a feeder (not shown) by means of the switching device 100, as per the embodiments of the present disclosure.

As shown in FIG 1, the switching device 100 includes multiple compartments, for example, a circuit breaker compartment 100A, a busbar compartment 100B, and a cable compartment 100C. Hereinafter, the various components and assemblies of the breaker compartment 100A have been described generally being part of the switching device 100 without any limitations.

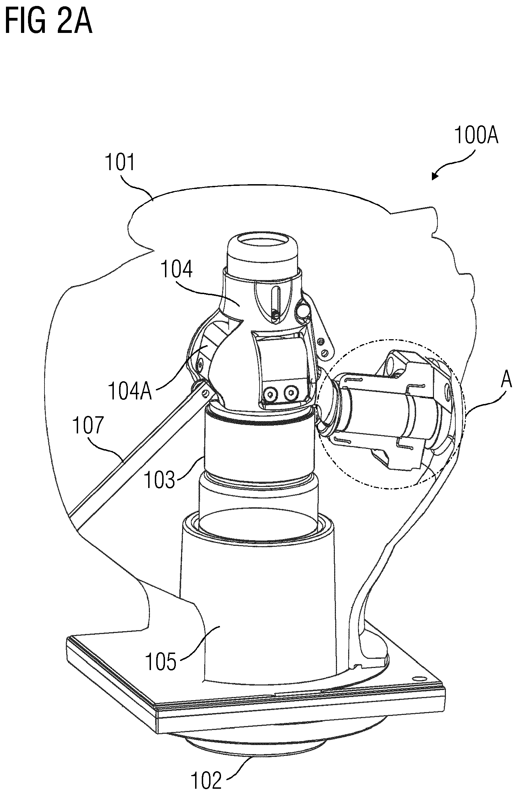

FIG 2A illustrates a perspective view of a circuit breaker compartment 100A with a section of a housing 101 of the circuit breaker compartment 100A cut-out for depicting components arranged therein, in accordance with one or more embodiments of the present disclosure. The housing 101 is also referred to as circuit breaker tank 101. As shown in FIG 1, the circuit breaker compartment 100A is depicted to be disposed in its closed-circuit configuration. The circuit breaker tank 101 is generally hollow and may have any suitable shape based on the design and configuration of the switching device 100. Herein, the circuit breaker tank 101 is typically grounded during operation, i.e. electrically connected to earth. Advantageously, the circuit breaker tank 101 is made of a suitable thermally conductive material, e.g. aluminum, such as cast aluminum. The circuit breaker tank 101 can also be made of copper, zinc or any other suitable electrically conductive material. Advantageously, the circuit breaker tank 101 may be plated with nickel or silver at certain locations, e.g. at electric connection areas (not shown). In the switching device 100, the circuit breaker tank 101 is filled with an insulating gas, for example, sulfur hexafluoride (SF6) or an alternative to SF6 such as a mixture of carbon dioxide gas and nitrogen gas.

The circuit breaker tank 101 of the circuit breaker compartment 100A encloses therein an arrangement for opening and closing of an electrical circuit between the first electrical terminal (not shown) and the second electrical terminal (not shown). The circuit breaker compartment 100A includes a stationary contact 102 at bottom of the circuit breaker compartment 100A. Further, the circuit breaker compartment 100A includes a moveable contact 103 arranged inside the circuit breaker tank 101. Herein, the stationary contact 102 is disposed in electrical connection with the first electrical terminal and the moveable contact 103 is disposed in electrical connection with the second electrical terminal, such that when the stationary contact 102 and the moveable contact 103 are in contact with each other, the circuit between the first electrical terminal and the second electrical terminal is disposed in a closed configuration, and when the stationary contact 102 and the moveable contact 103 are not in contact with each other, the circuit between the first electrical terminal and the second electrical terminal is disposed in an open configuration.

The moveable contact 103 is partially enclosed within a bearing block 104. The bearing block 104 is made of a good conducting metal such as aluminum, and at least partially encloses therewithin the moveable contact 103 along with components used in actuating movement of the moveable contact 103. In the present embodiments, the movable contact 103 and the stationary contact 102 are connected via a vacuum tube 105. Heat from the vacuum tube 105 is dissipated via the bearing block 104 via heat transfer elements, also known as heat flexibles 104A enclosed therewithin. The bearing block 104 on one side is supported via an auxiliary member 107 rigidly connected to the circuit breaker tank 101. This auxiliary member 107 can be made of ceramic to provide heat dissipation from the bearing block 104.

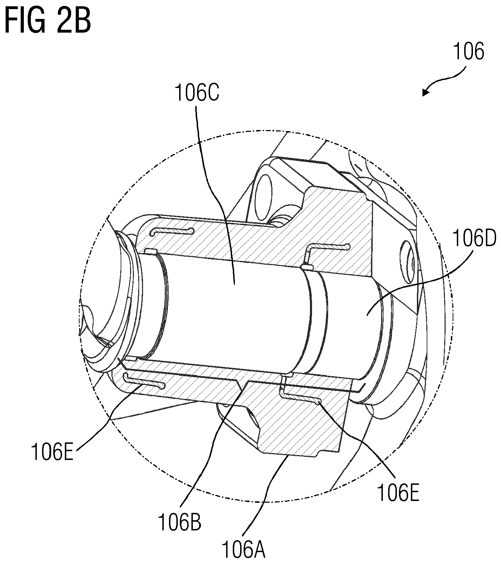

FIG 2B illustrates an enlarged view of a portion of the circuit breaker compartment 100A, marked "A" in FIG 2A showing a heat dissipation support unit 106. The heat dissipation support unit 106 is physically disposed between and is in connection with the bearing block 104 and the circuit breaker tank 101. In addition to the auxiliary member 107 the heat dissipation support unit 106 is angularly positioned with respect to the vacuum tube 105 shown in FIG 2A such that the heat dissipation support unit 106 provides mechanical support to the component assembly including the bearing block 104 having the moveable contact 103 and components for causing movement of the moveable contact 103 therewithin. The heat dissipation support unit 106 not only provides mechanical support, but also serves as a heat convection bridge for effective dissipation of heat generated while movement of the moveable contact 103 for opening and closing of the electrical circuit. Moreover, the heat dissipation support unit 106 is configured such that dielectric stability of the circuit breaker compartment 100A is improved thus, being suitable for different types of switching devices 100 irrespective of the insulant used in the switching device 100.

As shown in FIG 2B, the heat dissipation support unit 106 comprises an encapsulation 106A made of epoxy or resin materials. The encapsulation 106A accommodates therewithin a core 106B. The core 106B is coaxially positioned inside the encapsulation 106B. The core 106B is generally cylindrical in shape and includes two or more sections 106C and 106D joint together to form a single core 106B. The section 106C which is in physical contact with the bearing block 104 is made of a good conducting material such as Copper or Aluminium to provide for speedy heat transfer. Also, copper allows ease of mechanical grooves such as threaded profiles to be created that may be required for affixing the heat dissipation support unit 106 to the bearing block 104. The section 106D which is in physical contact with the circuit breaker tank 101 is made of a material such as ceramic that allows only heat to pass therethrough and not voltage thereby, allowing isolation between high voltage present at the bearing block 104 and the circuit breaker tank 101 which is at earth potential. According to an embodiment, the core 106B is made of three sections having Copper at the two ends, that is points of connection to the bearing block 104 and to the circuit breaker tank 101 respectively, and a ceramic section sandwiched therebetween.

The heat dissipation support unit 106 has electrodes 106E positioned at each physical joint between two or more dissimilar materials present in the core 106B, for example, a joint between the copper section 106C and the ceramic section 106D and/or a joint between the copper section 106C and the bearing block 104, etc. This strategic placement of electrodes 106E helps in reducing electrical stresses that may occur during operation of the switching device 100.

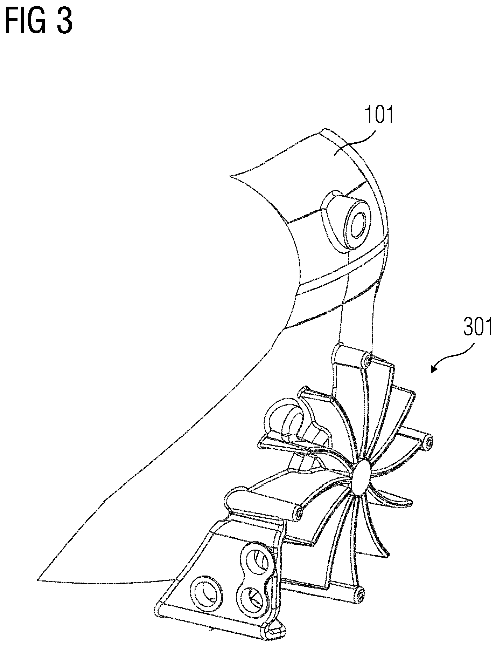

FIG 3 illustrates a section of the circuit breaker tank 101 of the circuit breaker compartment 100A shown in FIG 1 and FIG 2A. As shown in FIG 3, an outer profile of the circuit breaker tank 101 is configured to have heat convection elements 301. The heat convection elements 301 are positioned on the outer profile of the circuit breaker tank 101 such that heat dissipated via the heat dissipation support unit 106 shown in FIGS 2A-2B, is further distributed into ambient environment surrounding the circuit breaker compartment 100A thereby, having a thorough heat dissipation from the bearing block 104 to the ambient environment. The heat convection elements 301 can be designed in shape of fins to allow effective heat convection as well as support mounting of an air circulation unit such as a fan thereupon to assist heat dissipation with forced convection.

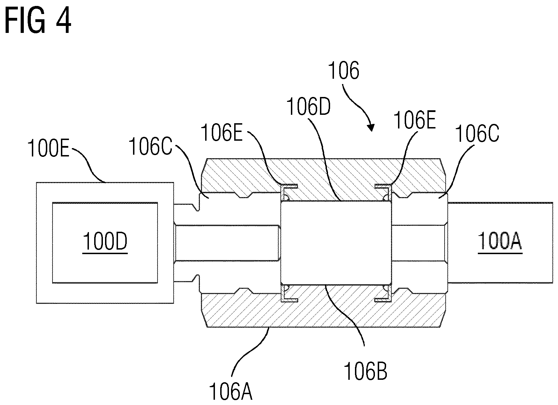

FIG 4 illustrates a heat dissipation support unit 106, in accordance with one or more embodiments of the present disclosure. As shown in FIG 4, the heat dissipation support unit 106 is physically disposed between a circuit breaker compartment 100A and an enclosure 100E of a drive unit 100D operating the moveable contact 103 in the circuit breaker compartment 100A. According to this embodiment, the heat dissipation support unit 106 is physically connected to the moveable contact 103 and to the enclosure 100E of the drive unit 100D such that the heat dissipation support unit 106 moves laterally along with movement of the moveable contact 103 during operation of the switching device 100. The heat dissipation support unit 106 comprises an encapsulation 106A enclosing therein a core 106B having sections 106C and 106D. The section 106C is made of a good conducting material such as copper or brass. The section 106D is made of ceramic. The sections 106C are configured as screw-on sockets. The screw-on sockets enable ease of connection to the moveable contact 103 and to bellows (not shown) of the drive unit 100D. The heat dissipation support unit 106 has electrodes 106E positioned at points of contact of dissimilar materials, that is, at points of connection of sections 106C and 106D. Although, FIG 4 shows only one core 106B, it should be appreciated that more than one such core 106B can be accommodated in various configurations within the encapsulation 106A.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A switching device (100) comprising:
- at least a switching compartment (100A), a busbar compartment (100B), a cable compartment (100C), and a drive unit (100D) operably connected to one another;
- the switching compartment (100A) comprising a stationary contact (102) and a moveable contact (103) moveable for opening and closing an electrical circuit formed therebtween:
**characterized by**:
- a heat dissipation support unit (106) physically disposable between a high heat - high voltage region (104, 103) proximal to the moveable contact (103) and a low heat - earth potential region (101, 100E) thereby, forming a heat convection bridge therebetween during operation of the switching device (100).

2. The switching device (100) according to claim 1, wherein the heat dissipation support unit (106) comprises an encapsulation (106A) accommodating therein at least one core (106B), and wherein the at least one core (106B) comprises two or more sections (106C and 106D) rigidly connected to one another.

3. The switching device (100) according to claim 2, wherein one of the sections (106C) is made of at least a good conducting metal and connected to the high heat - high voltage region (104, 103) of the switching device (100).

4. The switching device (100) according to claim 2, wherein one of the sections (106D) is made of ceramic and connected to the low heat - earth potential region (101, 101E) of the switching device (100).

5. The switching device (100) according to the claim 2, wherein the heat dissipation support unit (106) comprises an electrode (106E) positioned at each of the one or more physical joints formed between the sections (106C and 106D) of the core (106B).

6. The switching device (100) according to claim 1, wherein the high heat - high voltage region (104, 103) comprises one of the moveable contact (103) and a bearing block (104) at least partially accommodting therewithin the moveable contact (103).

7. The switching device (100) according to claim 1, wherein the low heat - earth potential region (101, 100E) comprises one of a switching compartment housing (101) and a housing (100E) of the drive unit (100D) of the switching device (100).

8. The switching device (100) according to any one of the previous claims, is a medium voltage switchgear.
